# EUROPEAN PATENT APPLICATION

(11) **EP 2 348 677 A1**
(43) Date of publication of application: **27.07.2011**
(21) Application number: 11000324.1
(22) Date of filing: 17.01.2011
(51) Int. Cl.: H04L 12/56

(54) **Method and apparatus for an ethernet connector comprising an integrated PHY**

(30) Priority: 25.01.2010 US 298076 P; 08.02.2010 US 702173
(71) Applicant: Broadcom Corporation, Irvine, CA 92617 (US)
(72) Inventor: Diab, Wael, William, 94109 San Francisco CA (US); Powell, Scott, 92656 Aliso Viejo CA (US)
(74) Representative: Jehle, Volker Armin

(57) **Abstract**

A connector comprising a physical layer transceiver device may perform physical layer functions for a communicatively coupled communication device. The physical layer functions may comply with OSI layer one methods. The physical layer transceiver device may be integrated on a single chip and/or on a plurality of chips within the connector. Wire-line and/or wireless technologies and/or protocols may be utilized for communication via the connector. Data may be communicated by the physical layer transceiver device via a mated corresponding connector coupled to a twisted pair cable. Data may be communicated by the physical layer transceiver device via a mated corresponding connector and/or dongle comprising an antenna and/or a wireless access point. The connectors may utilize Power over Ethernet (PoE). The physical layer transceiver device may support Ethernet extended reach mode. A plurality of the connectors may be ganged together.

## Description

### CROSS-REFERENCE TO RELATED APPLICATIONS/INCORPORATION BY REFERENCE

This application makes reference to, claims priority to, and claims the benefit of United States Provisional Application Serial No. 61/298,076, filed on January 25, 2010 which is incorporated herein by reference in its entirety.

This application makes reference to:
United States Patent Application Serial No. ____ (Attorney Docket Number 20740US01) which was filed on ____;
United States Patent Application Serial No. ____ (Attorney Docket Number 20743US01) which was filed on ____;
United States Patent Application Serial No. ____ (Attorney Docket Number 20744US01) which was filed on ____;
United States Patent Application Serial No. ____ (Attorney Docket Number 20745US01) which was filed on ____;
United States Patent Application Serial No. ____ (Attorney Docket Number 20746US01) which was filed on _____;
United States Patent Application Serial No. ____ (Attorney Docket Number 20747US01) which was filed on ____;
United States Patent Application Serial No. ___ (Attorney Docket Number 20748US01) which was filed on ____; and
United States Patent Application Serial No. 11/473,205 which was filed on June 22, 2006.

Each of the above stated applications is hereby incorporated herein by reference in its entirety.

### FIELD OF THE INVENTION

Certain embodiments of the invention relate to wired communication systems. More specifically, certain embodiments of the invention relate to a method and apparatus for an Ethernet connector comprising an integrated PHY.

### BACKGROUND OF THE INVENTION

Communication devices may incorporate a plurality of features, for example, a mobile phone, a digital camera, an Internet browser, a gaming device, a Bluetooth headphone interface and/or a location device. In this regard, the communication devices may be operable to communicate via a plurality of wire-line and/or wireless networks such as local area networks, wide area networks, wireless local area networks, cellular networks and wireless personal area networks, for example. In this regard, endpoint devices may communicate via various wireless and/or wire-line switches, routers, hubs, access points and/or base stations.

Many communication devices may communicate via twisted pair cables which may comprise pairs of copper wire that are twisted together. Various numbers of twists or turns in the wire pairs may enable mitigation of common mode electromagnetic interference. Twisted pair cabling may be shielded and/or unshielded. Shielding may comprise a conductive material that may enable grounding of the cable. The shielding may enclose a single pair of twisted wires and/or may enclose a plurality of pairs. The shielding may comprise foil and/or a braided sheath, for example. In this regard, the shielding may mitigate cross talk between twisted pairs and/or between a plurality of cables. Various properties of a cable, for example, wire gauge, safety information, category, verification of testing, inner shielding, outer shielding, no shielding, type of use, such as patch cord, and/or country of manufacture may be imprinted on the cable jacket during manufacture.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A method and/or apparatus for an Ethernet connector comprising an integrated PHY.
According to an aspect, a method for communication is provided, the method comprising:
performing utilizing one or more processors and/or circuits in a connector, wherein said one or more processors and/circuits comprise one or more physical layer transceiver devices:
   executing physical layer functions within said connector utilizing said one or more physical layer transceiver devices when communicating data via a medium that is communicatively coupled to said connector.
Advantageously, the method further comprises performing said physical layer functions for a communication device that is communicatively coupled to said connector.
Advantageously, said physical layer functions comprise one or more OSI layer one functions.
Advantageously, said one or more physical layer transceiver devices are integrated on one or more chips within said connector.
Advantageously, the method further comprises communicating said data via one or both of wired and/or wireless communication.
Advantageously, the method further comprises communicating said data by said one or more physical layer transceiver devices via corresponding connectors that are coupled to a twisted pair cable.
Advantageously, the method further comprises wirelessly communicating said data via an antenna and/or a wireless access point that is integrated within said connector.
Advantageously, the method further comprises one or both of:
utilizing power received via power over Ethernet; and
transporting power via said connector utilizing power over Ethernet.
Advantageously, the method further comprises communicating said data via said one or more physical layer transceiver devices in an Ethernet extended reach mode.
Advantageously, said connector comprises a form factor that integrates within a handheld communication device.
According to an aspect, a system for communication comprises:
one or more processors, and/or circuits within in a connector wherein said one or more processors and/or circuits comprise one or more physical layer transceiver devices, said one or more processors and/or circuits are operable to:
   execute physical layer functions within said connector utilizing said one or more physical layer transceiver devices when communicating data via a medium that is communicatively coupled to said connector.
Advantageously, said processors and/or circuits are operable to perform said physical layer functions for a communication device that is communicatively coupled to said connector.
Advantageously, said physical layer functions comprise one or more OSI layer one functions.
Advantageously, said one or more physical layer transceiver devices are integrated on one or more chips within said connector.
Advantageously, said processors and/or circuits are operable to communicate said data via one or both of wired and/or wireless communication.
Advantageously, said processors and/or circuits are operable to communicate said data by said one or more physical layer transceiver devices via corresponding connectors that are coupled to a twisted pair cable.
Advantageously, said processors and/or circuits are operable to wirelessly communicate said data via an antenna and/or a wireless access point that is integrated within said connector.
Advantageously, said processors and/or circuits are operable to one or both of:
utilize power received via power over Ethernet; and
transport power via said connector, utilizing power over Ethernet.
Advantageously, said processors and/or circuits are operable to communicate said data via said one or more physical layer transceiver devices in an Ethernet extended reach mode.
Advantageously, said connector comprises a form factor that integrates within a handheld communication device.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary connector interface that comprises a connector with an integrated PHY device, in accordance with an embodiment of the invention.

FIG. 2 is a block diagram illustrating an exemplary connector interface that is capable of wireless communication and comprises a connector with an integrated PHY device, in accordance with an embodiment of the invention.

FIG. 3 is a block diagram that illustrates an exemplary connector interface that comprises a connector with a plurality of integrated PHY devices, in accordance with an embodiment of the invention.

FIG. 4 is a flow chart illustrating exemplary steps for communicating via a connector comprising an integrated physical layer device, in accordance with an embodiment of the invention.

### DETAILED DESCRIPTION OF THE INVENTION

Certain embodiments of the invention can be found in a method and apparatus for an Ethernet connector comprising an integrated PHY. Various aspects of the invention comprise one or more processors and/or circuits in a connector that may comprise one or more physical layer transceiver devices. In this regard, physical layer functions may be executed by the one or more physical layer transceiver devices within the connector when communicating data via a medium that is communicatively coupled to the connector. The physical layer transceiver device may be operable to perform one or more physical layer functions as specified by the Open System Interconnect (OSI) model. The physical layer functions may be performed for a communication device that is communicatively coupled to the connector. The physical layer functions may comprise one or more OSI layer one functions. The one or more physical layer devices may be integrated on one or more chips within the connector. The data may be communicated via one or both of wired and/or wireless communication. The information may be communicated by the one or more physical layer transceiver devices via a mated corresponding connector that may be coupled to a twisted pair cable. In various embodiments of the invention, the data may be communicated wirelessly, via an antenna and/or a wireless access point that is integrated within the connector. The connector may utilize power received via power over Ethernet (POE). Furthermore, power may be transported by the connector utilizing POE. The data may be communicated via the one or more physical layer transceiver devices in an Ethernet extended reach mode. A plurality of instances of the connector may be ganged together. The connector may comprise a form factor that integrates within a handheld communication device. In various embodiments of the invention, the connector may comprise a form factor that may enable greater than 48 connectors to be integrated in a one rack unit (1RU) face plate. In this manner, electronic design of a circuit board may be simplified and/or interference and/or noise may be mitigated in communication between a connector and various modules within a communication device.

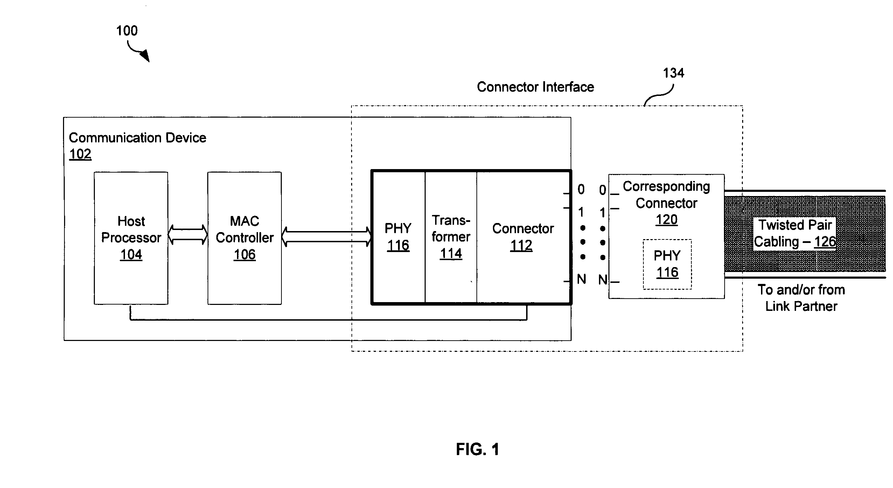

FIG. 1 is a block diagram illustrating an exemplary connection interface that comprises a connector with an integrated PHY device, in accordance with an embodiment of the invention. Referring for FIG. 1, there is shown a communication system 100 comprising a communication device 102 and a connector interface 134. The communication device 102 may comprise a host 104, a MAC controller 106, a PHY device 116 and a connector 112. The connector interface 134 may comprise the connector 112 comprising a transformer 114, a corresponding connector 120 and a cable 126.

The communication device 102 may comprise suitable logic, circuitry, interfaces and/or code that may be operable to communicate with other communication devices via the connector interface 134. An exemplary embodiment of the communication device 102 may comprise, for example, a router, a switch, a patch panel, a laptop, a portable phone, a media player, a location device, a television, a set-top-box, a camera and/or a gaming device. The communication device 102 may be operable to communicate via the connector interface 134 based on one or more of a plurality of different standardized and/or non-standardized communication protocols and/or communication technologies. For example, the communication device 102 may be operable to communicate based on various Ethernet protocols.

The host 104 may comprise suitable logic, circuitry, interfaces and/or code that may be operable to control one or more aspects of communication via the connector interface 134. The host 104 may be communicatively coupled with the MAC controller 106a for communication of data and/or control information.

The MAC controller 106 may comprise suitable logic, circuitry, interfaces and/or code that may be operable to handle data link layer, OSI layer 2, operability and/or functionality in the communication device 102. In this regard, may be operable to handle addressing and/or access control to a wire-line network and may, for example, enable transmission of Ethernet frames. The MAC controller 106 may be operable to buffer, prioritize and/or otherwise coordinate transmission and/or reception of data via the PHY device 116. Furthermore, the MAC controller 106 may be operable to perform packetization, depacketization, encapsulation and/or decapsulation of data. In various embodiments of the invention, the MAC controller 106 may be configured to implement Ethernet protocols, such as those based on the IEEE 802.3 standard, for example. The MAC controller 106 may be operable to communicate with the host 104 and/or the PHY device 116.

The connector interface 134 may be configurable to support communication based on a plurality of wire-line, wireless and/or optical communication protocols which may be standardized and/or non-standardized. The connector interface 134 may comply with standardized and/or non-standard specifications. For example, the connector interface 134 may comply with one or more cabling standards, for example, ISO/IEC and/or TIA standards.

The connector interface 134 may comprise one or more connectors and/or cables that may comprise the connector 112, the corresponding connector 120 and/or the cable 126. The connector 112 and/or the corresponding connector 120 may comprise a PHY device, for example, the connector 112 and/or the corresponding connector 120 may comprise the PHY device 116. The PHY device 116 may comprise a transceiver and may be operable to communicate data, for example, multimedia data, to a link partner, for example, via the twisted pair cable 126. The PHY device 116 may be operable to communicate with the MAC controller 106 and/or the host 104. The connector 112 and/or the corresponding connector 120 may comprise Ethernet connectors such as an RJ45 and/or may comprise other types and/or other styles of connectors; however, the invention is not limited in this regard. For example, the connector 112, the corresponding connector 120 and/or the cable 126 may be small enough to fit into a handheld device, for example, a mobile phone, a VOIP phone and/or a laptop. Moreover, the connector 112, the corresponding connector 120 and/or the cable 126 may be small enough to enable greater than 48 connectors to fit into a one rack unit face plate. In various embodiments of the invention, the connector interface 134 may be small enough to fit 96 connectors into a one rack unit face plate, for example. The connector interface 134 may be operable to support wireless communication. Moreover, the connector interface 134 may be configurable as a plurality of ganged connectors. The connector interface 134, the corresponding connector 120 and/or the connector 112 may comprise modular units. Furthermore, the connector interface 134, the corresponding connector 120 and/or the connector 112 may be configurable. For example, the connector 112 and/or the corresponding connector 120 may be populated and/or depopulated with various modules or optional features and/or may be configurable, for example, by loading software or firmware and/or by setting hardware. United States Patent Application Serial No. ____ (Attorney Docket Number 20745US01) filed on ____, which is incorporated herein by reference in its entirety, may comprise additional information regarding such a connector and/or cabling system.

Voltage may be supplied to the connector interface 134 in any suitable manner. For example, voltage may come from the host 104, from a power source located within the connector interface 134 and/or from power over Ethernet (PoE). United States Patent Application (Attorney Docket 20746US01), filed on ____, which is incorporated herein by reference in its entirety, describes connectors and/or cables that may utilize power over Ethernet functionality.

The connector 112 may comprise suitable logic, circuitry, interfaces and/or code that may be operable to terminate the corresponding connector 120 and/or the cable 126 and/or support communication via the corresponding connector 120 and/or the cable 126. The connector 112 may comprise magnetics, for example, the transformer 114. In various embodiments of the invention, the connector 112 may comprise one or more PHY devices, for example, the PHY 116. By integrating the PHY device 116 within the connector 112, rather then placing it some distance from the connector 112, for example, on a circuit board within the communication device 102, various traces, and/or circuitry may be simplified, reduced and/or eliminated from the circuit board. In this regard, the PHY device 116 may offload PHY functionality from the communication device 102 and may simplify electronic design, reduce noise and/or reduce complexity within the communication device 102. The connector 112 and/or the PHY device 116 and may be communicatively coupled to the MAC controller 106 and/or to the host 104. Furthermore, the connector 112 may be configurable for wire-line, wireless and/or optical communication, for example, the connector 112 may function as an antenna port. The connector 112 may be multifunctional and may be operable to support a plurality of types of communication concurrently and/or sequentially. In this regard, the corresponding connector 120 may comprise an access point and/or antenna circuitry. United States Patent Application Serial No. (Attorney Docket Number 20747US01), filed on ____, which is incorporated herein by reference in its entirety, may comprise additional information regarding a connection platform comprising wireless and/or wire-line capability.

The PHY device 116 may comprise a transceiver and may be operable to communicate data, for example, multimedia data, to a link partner, for example, via the twisted pair cable 126. The PHY device 116 may be integrated within the connector 112 and/or within the corresponding connector 120 (not shown) and may be operable to communicate in an upstream and/or a downstream direction at various data rates, for example, <10 Mbps, 10 Mbps, 100 Mbps, 1000 Mbps (or 1 Gbps), 10 Gbps, 40 Gbps, and/or other data rates, for example. In this regard, the PHY device 116 may support standards-based data rates and/or non-standard data rates via the corresponding connector 120 and/or the cable 126. The PHY device 116 may be configured to handle physical layer requirements, which may comprise, for example, encoding data, packetization, data transfer and serialization/deserialization (SERDES), in instances where such an operation is required. In this regard, the PHY device 116 may perform OSI layer one operations. Although the PHY device 116 is shown within the connector 112, the invention is not so limited and in various embodiments of the invention, the corresponding connector 120 may comprise a PHY device such as the PHY device 116. A PHY device integrated within the corresponding connector 120 may be operable to communicate via the twisted pair cable 126 or may be operable to convert electrical signals from the communication device 102 to optical or wireless signals for transmission.

The PHY device 116 may comprise an individual port, for example, in a handheld device or it may comprise a plurality of ports, for example, ganged PHY devices. In this regard, the PHY device 116 may comprise one or more chips that may each comprise one or more PHY devices, for example. In instances when the connector interface 134 comprises a plurality of PHY devices 116, one or more signals that are communicated to or from one or more of the plurality of PHY devices to or from the MAC controller 106 and/or to or from the host 104 may be aggregated and/or may be communicated via a single trace. Furthermore, the PHY device 116 may be configured to communicate with a link partner in an extended reach mode. United States Patent Application Serial No. 11/473,205 filed on June 22, 2006, which is incorporated herein by reference in its entirety, may comprise additional information regarding extended reach Ethernet techniques.

The corresponding connector 120 may be coupled to the cable 126. The corresponding connector 120 may be operable to connect to the connector 112 and may be utilized for communication between the communication device 102 and a link partner. The corresponding connector 120 may comprise suitable logic, circuitry, interfaces and/or code that may be operable to communicate based on IEEE 802.3 standards and/or extensions and/or variations thereof. In various embodiments of the invention, the corresponding connector 120 may comprise a PHY device such as the PHY device 116.

The corresponding connector 120 and/or the cable 126 may be configured, for example, during manufacture, by a user and/or by the device 102. For example, the connector 112 and/or the corresponding connector 120 may be populated and/or depopulated with various modules or optional features and/or may be configurable, for example, by loading software or firmware and/or setting hardware. In various embodiments of the invention, the corresponding connector 120 may comprise wireless capability, for example, the corresponding connector may comprise an antenna and/or a wireless access point.

The cable 126 may comprise a copper medium, for example, the cable 126 may comprise any suitable number of pairs of insulated twisted wires. The number of pairs within the cable 126 as well as other factors, such as shielding, the length of the cable and/or wire gauge may determine which protocols and/or which data rates the cable 126 may be operable to support. In various embodiments of the invention, the cable 126 may comprise one or more shields or may be unshielded. The shield may comprise, for example, foil and/or a braided sheath around and/or along a length of one or more twisted pairs. For example, one or more individual twisted pairs may be shielded and/or all of the twisted pairs may be shielded together. Moreover, the cable 126 may comprise any suitable category and/or class of cabling, for example, class D, class E, class F and/or category 5, category 6 and/or category 7.

In operation, the communication device 102 may comprise the connector 112 and the corresponding connector 120 and/or the cable 126 may be coupled to the connector 112. The connector 112 may comprise one or more wireless, wire-line and/or optical PHY devices, for example, the PHY device 116. The host 104 may be operable to communicate and/or perform auto-negotiation via the PHY device 116, the corresponding connector 120 and/or the cable 126. Integration of the PHY device 116 within the connector 112 may offload PHY functionality from the communication device 102. This may enable reduction, modification, aggregation and/or elimination of traces and/or conductors within the communication device 102 that may otherwise carry higher power signals from a cable to a PHY device. For example, signals between the connector 112 and the MAC controller 106 may comprise lower power digital signals. Offloading the PHY functionality from, for example, a circuit board within the communication device 102, to the connector interface 134 and/or to the connector 112, may enable simplification of electronic design, fewer components, reduction of noise and/or a reduction in complexity, for example, near the connector 112. Furthermore, in instances when the communication device 110 may comprise a small device, for example, a handled device, a laptop and/or a VOIP phone, a need for valuable surface area and/or layers of a circuit board may be reduced by integrating the PHY device 116 on the connector 112.

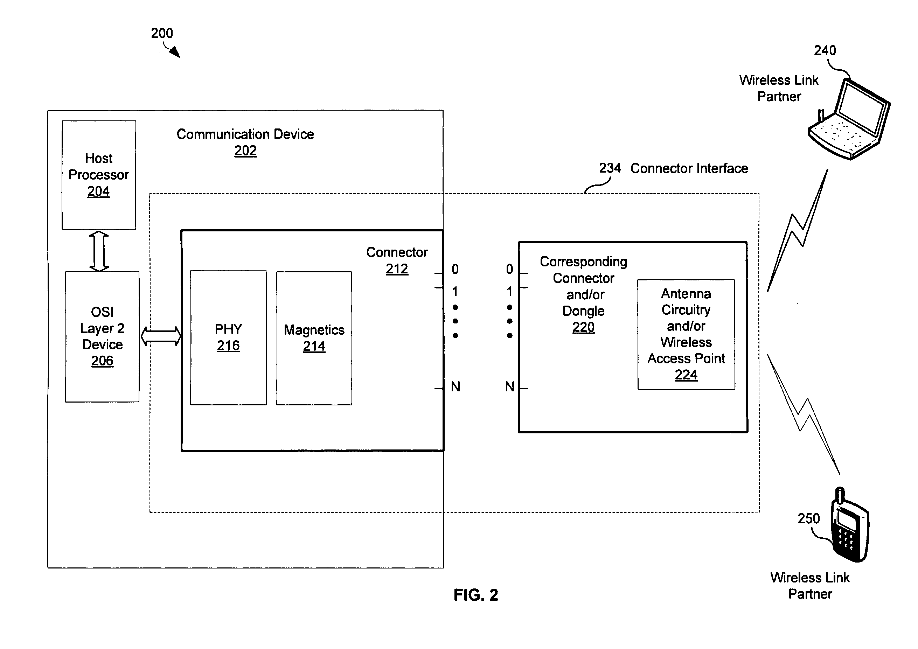

FIG. 2 is a block diagram illustrating an exemplary connector interface that is capable of wireless communication and comprises a connector with an integrated PHY device, in accordance with an embodiment of the invention. Referring to FIG. 2, there is shown, a communication system 200 comprising a plurality of communication devices 202, 240 and 250. The communication device may comprise the host 204, the layer 2 device 204 and the connector 212. In addition, there is shown a connector interface 234 that may comprise the connector 212, magnetics 214, a PHY 216, a corresponding connector and/or dongle 220 and antenna circuitry and/or wireless access point 224.

The communication device 202, may comprise suitable logic, circuitry, interfaces and/or code that may be operable to communicate via one or more of any suitable wireless and/or wire-line interface. For example, the communication device 202 may communicate based on IEEE 802.11 and/or variations thereof, Bluetooth, cellular and/or IEEE 802.3 and variations thereof. In this regard, the communication device 202 may comprise one or more of a router, a switch, a patch panel, a laptop, a portable phone, a media player, a location device, television, set-top-box, a camera and/or gaming device, for example. In various embodiments of the invention, the communication device 202 may be operable to communicate based on a plurality of communication interfaces via the connector 212. The host 204 may be similar and/or substantially the same as the host 104 described with respect to FIG. 1. The layer 2 device 206 may perform OSI layer 2 functionality and may be communicatively coupled to the PHY device 216 and/or to the host 204. In various embodiments of the invention, the layer 2 device 206 may be similar and/or substantially the same as the MAC controller 106.

The connector interface 234 may be configurable and/or may be operable to support wired and/or wireless communication. The connector interface 234 may comprise the connector 212 that may be referred to as the connector 212, and/or the corresponding connector and/or dongle 220. The connector interface 234 may also comprise the antenna circuitry and/or wireless access point 224 that may be integrated within housing of the corresponding connector and/or dongle 220, for example.

The communication device 202 may comprise the connector 212. The connector 212 may comprise the magnetics 214 that may comprise, for example, a transformer. In addition, the connector 212 may comprise the PHY device 116 which may be integrated within the connector 212.

The connector 212 may be communicatively coupled to the corresponding connector and/or dongle 220 based on standardized and/or non-standard specifications. For example, the connector 212 and the corresponding connector 220 may comprise RJ45 Ethernet connectors in the connector interface 234. Alternatively, dimensions of the connector 212 and/or of the corresponding connector 220 may be on a scale that is small enough to fit into a handheld device and/or small enough to enable greater than 48 connectors 212 and/or corresponding connectors 220 to fit into a one rack unit face plate. For example, 96 connectors 212 and/or corresponding connectors 220 may fit into a one rack unit face plate. Furthermore, in various embodiments of the invention, the connector interface 234 may comprise a plurality of connectors such as the connector 212 that may be ganged together. In this regard, United States Patent Application Serial No. ____ (Attorney Docket Number 20745US01) filed on ____, which is incorporated herein by reference in its entirety, may comprise additional information regarding such a connector and/or cabling system. Moreover, in various embodiments of the invention, the connector 212 and/or the corresponding connector 220 may be operable to supply and/or receive power, for example, based on power over Ethernet.

The connector 212 and/or the PHY device 216 may be configurable to transmit and/or receive wireless communication. The connector 212 may function as an antenna port. The connector 212 may comprise multifunctional capabilities where a plurality of types of communication may operate concurrently and/or sequentially. For example, the connector 212 may receive input from a cable as well as input from an antenna. In various embodiments of the invention, the connector 212 may be configurable. In this regard, the connector 212 may comprise a mechanical or electrical switch or detection mechanism that may be operable to detect whether a cable or an antenna is mated to the connector. Moreover, a cable may be attached that comprises an antenna as well as wire or optical conductors and may be operable to communicate via the plurality of media.

The corresponding connector and/or dongle 220 may comprise suitable logic, circuitry interfaces and/or code that may be operable to communicate based on one or more of a plurality of communication interfaces. For example, the corresponding connector and/or dongle 220 may be operable to communicate with the communication device 202 based on 802.3 and/or extensions and/or variations thereof. Furthermore, the corresponding connector and/or dongle 220 may be operable to communicate wirelessly, for example, based on 802.11 and/or extensions and/or variations thereof, with one or more of the communication devices 240 and/or 250. For example, the corresponding connector and/or dongle 220 may comprise the antenna circuitry and/or wireless access point 224. In this regard, the corresponding connector and/or dongle 220 may comprise suitable logic, circuitry, interfaces and/or code that may be operable to convert between wireless and wired protocols, for example, between IEEE 302.3 and 802.11. As such, the corresponding connector and/or dongle 220 may be operable to rate match between wired protocol and wireless protocol.

In various embodiments of the invention, the antenna circuitry and/or wireless access point 224 may be integrated within a housing of the corresponding connector and/or dongle 220. In other embodiments of the invention, the corresponding connector and/or dongle 220 may comprise a dongle that may be integrated with a corresponding connector where the antenna circuitry and/or wireless access point 224 may be built within a dongle. The antenna circuitry and/or wireless access point 224 may comprise an antenna and/or may comprise suitable logic, circuitry, interfaces and/or code that may be operable to process sent and/or received signals. In instances when a plurality of the corresponding connectors and/or dongle 220 units are ganged together, each corresponding connector and/or dongle 220 may have its own antenna circuitry and/or wireless access point 224 or two or more units may share antenna circuitry, for example. The corresponding connector and/or dongle 220 may be operable to communicate with the communication device 202 based on Ethernet and/or may be operable to communicate wirelessly with one or more of the communication devices 240 and 250. For example, wireless communication with the communication devices 240 and/or 250 may be based on one or more variations and/or extensions of IEEE 802.11. Moreover, the corresponding connector and/or dongle 220 may be operable to wirelessly communicate based on wireless technologies such as, for example, Bluetooth, cellular, satellite and/or Zigbee. The corresponding connector and/or dongle 220 may convert wire-line signals to wireless signals and vice versa. In various embodiments of the invention, the corresponding connector and/or dongle 220 may be operable to receive power from the connector 212, for example, via power over Ethernet. United States Patent Application (Attorney Docket 20746US01), filed on ____, which is incorporated herein by reference in its entirety, describes a connector and/or cabling system that may provide power over Ethernet functionality.

The communication devices 240 and 250 may comprise suitable logic, circuitry, interfaces and/or code that may be operable to communicate wirelessly with the corresponding connector and/or dongle 220. In this regard, the communication devices may comprise wireless and/or wire-line link partners with regard to the PHY device 216 and/or with regard to the communication device 210. The communication devices 240 and/or 250 may be stationary, portable and/or handheld devices. For example, the communication devices 240 and/or 250 may comprise one or more of a mobile phone, a media player, a location device, a television, a set-top-box, a camera and/or a gaming device. In an exemplary embodiment of the invention, the communication devices 240 and 250 may be a laptop and a handheld device respectively and may be referred to as the laptop 240 and the handheld device 250. The laptop 240 and/or handheld device 250 may be operable to communicate wirelessly communication device 202.

In operation, the communication device 202 may be, for example, a switch which may be referred to as the switch 202 and which may comprise the connector 212. The connector 212 may comprise the PHY device 216 that may communicate via the corresponding connector and/or dongle 220 and the antenna circuitry and/or wireless access point 224 with the communication device 240, for example. In instances when the corresponding connector and/or dongle 220 comprises an antenna, the PHY device 216 may communicate with the communication device 240 based on IEEE 802.11 standards via the antenna, for example. In instances when the corresponding connector and/or dongle 220 comprises a wireless access point and/or antenna, the PHY device 216 and the corresponding connector and/or dongle 220 may be configured to communicate with each other based on IEEE 802.3 for example. In this regard, the antenna circuitry and/or wireless access point 224 may be operable to convert wireless signals received from the handheld device 250 to Ethernet signals and to communicate the Ethernet signals to the communication device 202 and vice versa.

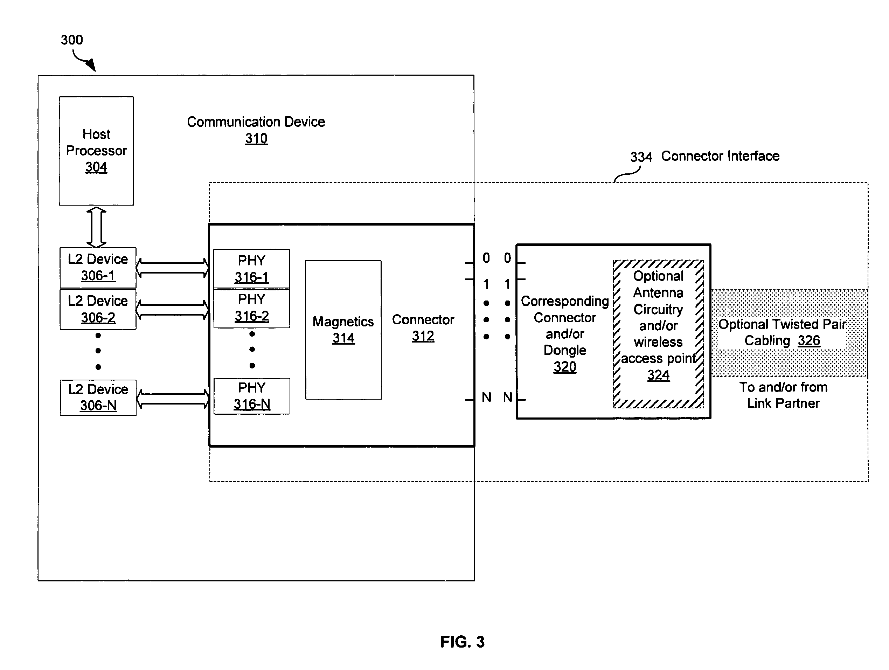

FIG. 3 is a block diagram that illustrates an exemplary connector interface that comprises a connector with a plurality of integrated PHY devices, in accordance with an embodiment of the invention. Referring to FIG. 3, there is shown, the communication system 300 that may comprise a communication device 310 and a connector interface 334. The communication device 310 may comprise the host 304 and a plurality of layer 2 devices 306₁, 306₂, ..., 306_{N}. The connector interface 334 may comprise a connector 312, magnetics 314, a plurality of PHY devices 316₁, 316₂, ..., 316_{N}, a corresponding connector and/or dongle 320, antenna circuitry and/or wireless access point 324 and a cable 326. One or more of the PHY devices 316₁, 316₂, ..., 316_{N} may be referred to as the PHY devices 316. Similarly, one or more of the layer 2 devices 306₁, 306₂, ... , 306_{N} may be referred to as the layer 2 devices 306.

The communication device 310 may comprise suitable logic, circuitry, interfaces and/or code that may be operable to communicate based one or more types of wireless and/or one or more types of wire-line technology. For example, the communication device 310 may be operable to communicate based on IEEE 802.3 and/or variations and extensions thereof. The communication device 310 may be operable to communicate based on one or more of IEEE 802.11, cellular, Bluetooth, satellite and Zigbee wireless technologies, for example. In various exemplary embodiments of the invention, the communication device 310 may comprise a laptop, a handheld phone, a media player, a camera, a gaming device, a location device, a switch, a router, a server and/or any suitable combination of devices. The communication device 310 may comprise the host 304 and, for example, a plurality of layer 2 devices 306₁, 306₂, ..., 306_{N}. One or more of the layer 2 devices 306₁, 306₂, ..., 306_{N} may be communicatively coupled with one or more of the PHY devices 316₁, 316₂, ..., 316_{N}. In this regard, ones of the layer 2 devices 306 may be similar and/or substantially the same as the MAC controller 106 and/or the layer 2 device 206, for example. The communication device 310 may comprise the connector 312 and may utilize one or more PHY devices 316 that may be integrated within the connector 312.

In an exemplary embodiment of the invention, the communication device 310 may be a laptop that may be operable to communicate based on a plurality of communication protocols via a plurality of corresponding PHY devices 316 that may be integrated within the connector 312. Moreover, connectors similar to the connector 312 may be ganged within the communication device 310.

The connector interface 334 may comprise aspects of all or a portion of the connector interface 134 and/or 234. The connector interface 334 may comprise suitable logic, circuitry, interfaces and/or that may be operable to support communication based on a plurality of types of wire-line and/or wireless communication. In addition, the connector interface 334, for example, may be operable to convert between wired and wireless communication protocols, for example, 802.3 and 802.11.

The connector 312 may comprise various aspects of the connectors 112 and/or 212. The connector 312 may be be communicatively coupled to the corresponding connector 320. The connector 312 may comprise the magnetics 316 and/or may comprise a plurality of PHY devices 316₁, 316₂, ..., 316_{N}, Ones of the PHY devices 316₁, 316₂, ..., 316_{N} may be similar and/or substantially the same as the PHY device 116 and/or the PHY device 216. A plurality of connectors such as the connector 312 may be ganged together.

In various embodiments of the invention, the plurality of PHY devices 316₁, 316₂, ..., 316_{N} may be integrated on a single chip and/or on a plurality of chips within the connector 312. For example, two octal PHY chips may be integrated within the connector 312 and/or may provide 16 ports for the communication device 310. The plurality of PHY devices 316₁, 316₂, ..., 316_{N} may comprise a single type of PHY device or may comprise a plurality of PHY types. For example, the PHY devices 316 may be operable to support one or more of IEEE 802.3, IEEE 802.11, cellular, Bluetooth, satellite communications, Zigbee and extensions and/or variations thereof. One or more of the PHY devices 316 may be configured to communicate with a link partner in an extended reach mode. Furthermore, one or more of the PHY devices 316 may be operable to receive and/or deliver power over Ethernet.

The corresponding connector and/or dongle 320 may comprise aspects that are similar and/or substantially the same as one or both of the corresponding connectors 120 and 220. For example, the corresponding connector and/or dongle 320 may support Ethernet communication and/or may optionally comprise a wireless access point and/or an antenna. In this regard, the corresponding connector and/or dongle 320 may optionally comprise the antenna circuitry and/or wireless access point 324 which may be similar and/or substantially the same as the antenna circuitry and/or wireless access point 324. In this regard, the corresponding connector and/or dongle 320 and/or the cable 326 may support wireless and/or wire-line communication to and/or from one or more of the plurality of PHY devices 316₁, 316₂, ..., 316_{N}. The corresponding connector and/or dongle 320 and/or the cable 326 may be operable to support one or more of IEEE 802.3, IEEE 802.11, cellular, Bluetooth, satellite communications, Zigbee and extensions and/or variations thereof.

The cable 326 is optional and may be coupled to the corresponding connector and/or dongle 320. The cable 326 may comprise twisted pair wires and/or may be similar and/or substantially the same as the cable 126 described with respect to FIG. 1. Furthermore, the cable 326 may optionally comprise an antenna (not shown) that may radiate outside of any cable shielding.

In operation, the communication device 310 may be accessed based on a plurality of communication protocols via the connector 312 and/or via the plurality of PHY devices 316₁, 316₂, ..., 316_{N}. In this regard, the connector interface 324 may be operable to communicatively couple a plurality of different types of wireless and/or wire-line devices that may communicate based on one or more communication protocols to the communication device 310. For example, a user may connect to the connector 312, the corresponding connector 320 that may be coupled to the cable 326 and/or may comprise the antenna circuitry and/or wireless access point 324. In this manner, the communication device 310 may be operable to communicate based on an Ethernet protocol via the cable 326, for example, and/or may concurrently and/or at different times communicate based on one or more wireless protocols via the antenna circuitry and/or wireless access point 324.

The communication device 310 may comprise one or more connectors such as the connector 312 that may be ganged together in some instances. In instances when the communication device 310 comprises a plurality of connectors such as the connector 312, the connectors 312 may be utilized interchangeably. For example, a user may connect an Ethernet cable to one instance of the connector 312 in the communication device 310 and may connect a corresponding connector comprising an antenna to another instance of the connector 312 in the communication device 310. In this regard, a user may connect one or more instances of the corresponding connector 326 to one or more instances of the connector 312. In this manner, the communication device 310 may be operable to communicate based on wire-line and/or wireless technologies.

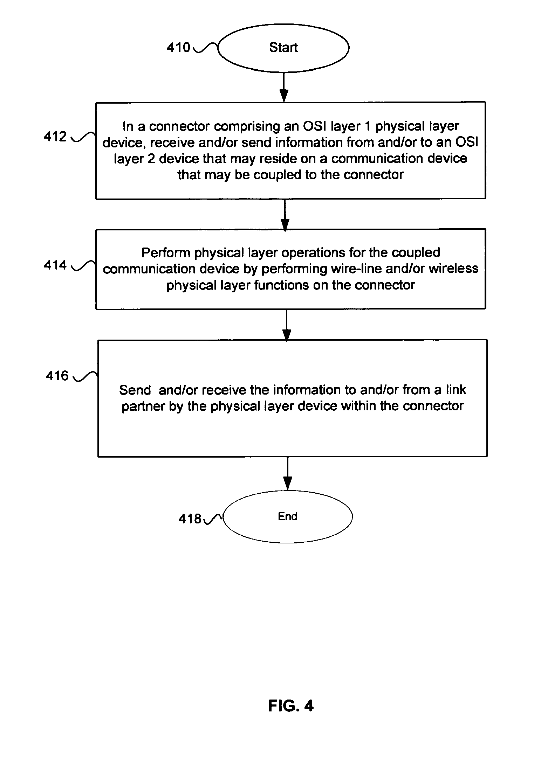

FIG. 4 is a flow chart illustrating exemplary steps for communicating via a connector comprising an integrated physical layer device, in accordance with an embodiment of the invention. Referring to FIG. 4, the exemplary steps may begin with step 410. In step 412, a connector, for example, one or more of the connectors 112, 212 and 312 may comprise an OSI layer 1 physical layer device 116, 216 and/or 316₁, 316₂, ..., 316_{N}. The OSI layer 1 physical layer device 116, 216 and/or 316₁, 316₂, ..., 316_{N} may be operable to receive and/or send information from and/or to an OSI layer 2 device 106, 206 and/or 306₁, 306₂, ..., 306_{N} respectively. In this regard, the OSI layer 2 device 106, 206 and/or 306₁, 306₂, ..., 306_{N}, may reside on the communication device 110, 210 and/or 310 respectively that may be coupled to the connector 112, 212 and/or 312 respectively. In step 414, physical layer operations may be offloaded from the coupled communication device 110, 210 and/or 310 by performing wire-line and/or wireless physical layer operations on the connector 112, 212 and/or 312. In step 416, the physical layer device 116, 216 and/or 316₁, 316₂, ..., 316_{N} within the connector 112, 212 and/or 312 respectively may send and/or receive the information to and/or from a link partner. The exemplary steps may end at step 418.

An embodiment of the invention may comprise one or more processors and/or circuits in a connector, for example, in the connectors 112, the connector 212 and/or the connector 312 that may comprise one or more physical layer transceiver devices (PHY), for example, the PHY 116, the PHY 216 and/or one or more of the PHYs 3161, 3162, ..., 316N respectively. In this regard, physical layer functions may be executed by the one or more physical layer transceiver devices within the connector when communicating data via a medium that is communicatively coupled to the connector, for example, via the twisted pair cable 126 or 226 or via a wireless link described with respect to FIG. 2. The physical layer functions may be performed for a communication device that is communicatively coupled to the connector, for example, the communication device 102, the communication device 202 and/or the communication device 310. The physical layer functions may comprise one or more OSI layer one functions. The one or more physical layer devices may be integrated on one or more chips within the connector. The data may be communicated via one or both of wired and/or wireless communication. The data may be communicated by the one or more physical layer transceiver devices via a mated corresponding connector, for example, the connector 120 and/or the connector 320 that may be coupled to a twisted pair cable, for example, the cable 126 or the cable 326 respectively. The connector and the corresponding connector may comprise a plug and a receptacle, respectively. The connector and the corresponding connector may comprise a receptacle and a plug, respectively.

In various embodiments of the invention, the data may be communicated wirelessly, via an antenna and/or a wireless access point 324 that is integrated within the connector 320, for example. The connector, for example, the connector may utilize power received via power over Ethernet (POE). Furthermore, power may be transported by the connector and/or the corresponding connector utilizing POE. The data may be communicated via the one or more of the physical layer transceiver devices in an Ethernet extended reach mode. A plurality of instances of the connector, for example, of the connector 112, of the connector 212 and/or of the connector 312 may be ganged together. The connectors 112, 212 and/or 312 may comprise a form factor that integrates within a handheld communication device, for example, the communication device 202 may be a handheld device. In various embodiments of the invention, the connectors 112, 212 and/or 312 may comprise a form factor that may enable greater than 48 connectors to be integrated in a one rack unit (1 RU) faceplate, for example, the communication device 310 may comprise a 1 RU faceplate.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for an Ethernet connector comprising an integrated PHY.

Accordingly, the present invention may be realized in hardware, software, or a combination of hardware and software. The present invention may be realized in a centralized fashion in at least one computer system or in a distributed fashion where different elements may be spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing utilizing one or more processors and/or circuits in a connector, wherein said one or more processors and/circuits comprise one or more physical layer transceiver devices:
executing physical layer functions within said connector utilizing said one or more physical layer transceiver devices when communicating data via a medium that is communicatively coupled to said connector.

2. The method according to claim 1, comprising performing said physical layer functions for a communication device that is communicatively coupled to said connector.

3. The method according to claim 1, wherein said physical layer functions comprise one or more OSI layer one functions.

4. The method according to claim 1, wherein said one or more physical layer transceiver devices are integrated on one or more chips within said connector.

5. The method according to claim 1, comprising communicating said data via one or both of wired and/or wireless communication.

6. The method according to claim 1, comprising communicating said data by said one or more physical layer transceiver devices via corresponding connectors that are coupled to a twisted pair cable.

7. The method according to claim 1, comprising wirelessly communicating said data via an antenna and/or a wireless access point that is integrated within said connector.

8. The method according to claim 1, comprising one or both of:
utilizing power received via power over Ethernet; and
transporting power via said connector utilizing power over Ethernet.

9. The method according to claim 1, comprising communicating said data via said one or more physical layer transceiver devices in an Ethernet extended reach mode.

10. The method according to claim 1, wherein said connector comprises a form factor that integrates within a handheld communication device.

11. A system for communication, the system comprising:
one or more processors, and/or circuits within in a connector wherein said one or more processors and/or circuits comprise one or more physical layer transceiver devices, said one or more processors and/or circuits are operable to:
execute physical layer functions within said connector utilizing said one or more physical layer transceiver devices when communicating data via a medium that is communicatively coupled to said connector.

12. The system according to claim 11, wherein said processors and/or circuits are operable to perform said physical layer functions for a communication device that is communicatively coupled to said connector.

13. The system according to claim 11, wherein said physical layer functions comprise one or more OSI layer one functions.

14. The system according to claim 11, wherein said one or more physical layer transceiver devices are integrated on one or more chips within said connector.

15. The system according to claim 11, wherein said processors and/or circuits are operable to communicate said data via one or both of wired and/or wireless communication.
